(19) Europäisches Patentamt
European Patent Office
Office européen des brevets

(11) **EP 2 638 456 B1**

(12) **EUROPEAN PATENT SPECIFICATION**

(45) Date of publication and mention
of the grant of the patent:
**12.06.2019 Bulletin 2019/24**

(51) Int Cl.:
***G06F 3/044*** *(2006.01)*

(21) Application number: **10859390.6**

(22) Date of filing: **11.11.2010**

(86) International application number:
**PCT/CN2010/001807**

(87) International publication number:
**WO 2012/061956 (18.05.2012 Gazette 2012/20)**

(54) **SINGLE-AXIS CAPACITIVE MULTI-TOUCH PANEL, SYSTEM AND METHOD**

KAPAZITIVE MONOAXIALE MEHFACHBERÜHRUNGSTAFEL, SYSTEM UND VERFAHREN

PANNEAU TACTILE MULTIPOINT CAPACITIF À UN SEUL AXE, SYSTÈME ET PROCÉDÉ ASSOCIÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.09.2013 Bulletin 2013/38**

(73) Proprietor: **TPK Touch Solutions (Xiamen) Inc.**
**Fujian 361009 (CN)**

(72) Inventor: **BAYRAMOGLU, Gokalp**
**Fujian 361006 (CN)**

(74) Representative: **Goddar, Heinz J. et al**
**Boehmert & Boehmert**
**Anwaltspartnerschaft mbB**
**Pettenkoferstrasse 22**
**80336 München (DE)**

(56) References cited:
**CN-A- 101 201 714       CN-U- 201 584 957**
**US-A1- 2005 160 387     US-A1- 2009 114 457**
**US-A1- 2009 114 457     US-A1- 2009 267 914**

• **Mark Kretschmar ET AL: "Capacitive Sensor Operation Part 1: The Basics | Sensors", , 1 May 2009 (2009-05-01), XP055205257, Retrieved from the Internet: URL:http://www.sensorsmag.com/sensors/position-presence-proximity/capacitive-sensor-operation-part-1-the-basics-5844 [retrieved on 2015-07-29]**

**Description**

**BACKGROUND OF THE INVENTION**

**1. FIELD OF THE INVENTION**

The present invention generally relates to a touch panel, and more particularly to a single-axis capacitive multi-touch panel, system and method.

**2. DESCRIPTION OF RELATED ART**

Touchscreen displays have been widely used in electronic devices such as portable and hand-held electronic devices. Touchscreen displays incorporate sensing technology and display technology. Growing liquid crystal display (LCD) developments further facilitate the integration of the sensing technology with the LCD.

Capacitive touch panel is one common type of the touch panel technologies. The capacitive touch panel utilizes capacitive sensing technology based on capacitive coupling effects for detecting touching position. A change in capacitance may be detected when a finger touches the surface of the capacitive touch panel. The detection may be based on self capacitance or mutual capacitance. In both self capacitance and mutual capacitance systems, electrodes of the multi-touch panel are manufactured in two axes to determine the touch location.

The self-capacitance touch panel performs based on the capacitance between electrodes and GND. As to the two-axis touch panel, there are lateral electrodes and longitudinal electrodes made of conductive materials, such as Indium Tin Oxide (ITO). The detection is based on the self-capacitance between lateral electrodes and GND, and the self-capacitance between longitudinal electrodes and GND. The self-capacitance changes relating to the lateral electrodes and the longitudinal electrodes are detected before and after touching to determine the touching point.

The mutual-capacitance touch panel performs based on the capacitance between different axis electrodes, such as between the lateral electrodes and the longitudinal electrodes in the coordinate system of two axes. Touching, for example, by a finger will affect the capacitive coupling at the touching point, and thus change its mutual-capacitance. In determining the touching point, the lateral electrodes are driven with signals and responses at the longitudinal electrodes are sensed.

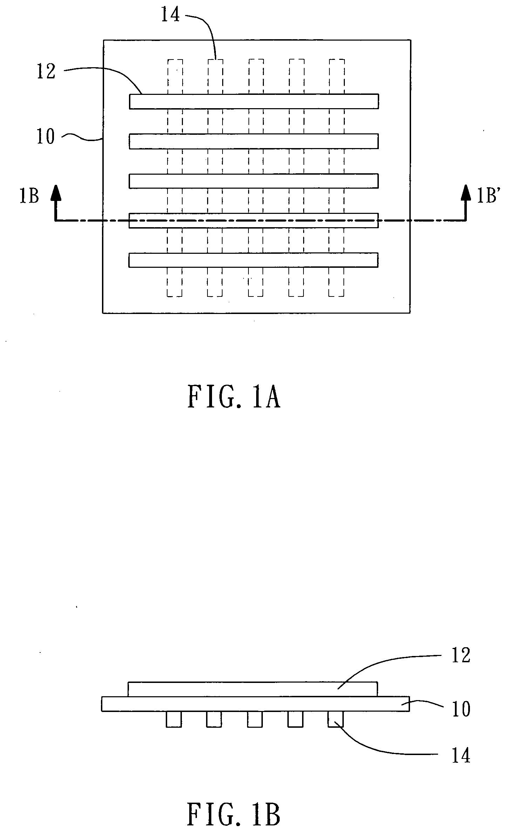

FIG. 1A shows a schematic top view of a conventional touch panel, and FIG. 1B shows a cross-sectional view taken along a sectional line 1B-1B' of FIG. 1A. Specifically, the lateral electrodes 12 are formed on the top surface of a substrate 10, and the longitudinal electrodes 14 are formed on the bottom surface of the substrate 10.

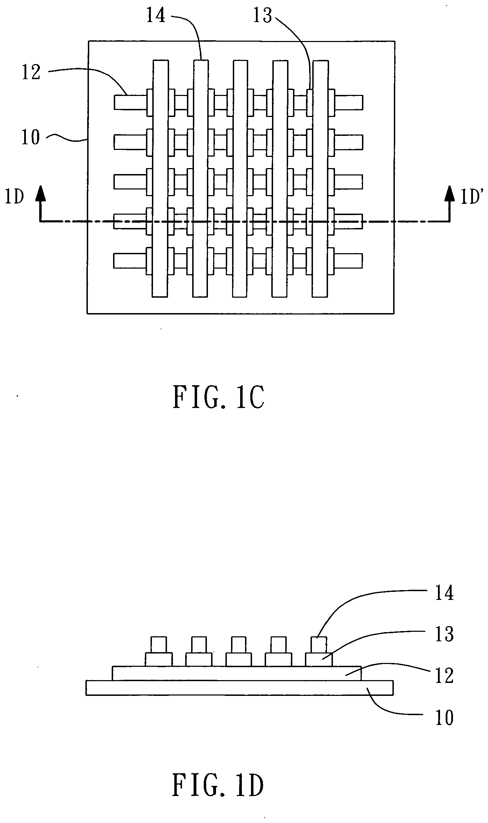

FIG. 1C shows a schematic top view of another conventional touch panel, and FIG. 1D shows a cross-sectional view taken along a sectional line 1D-1D' of FIG. 1C. Specifically, the lateral electrodes 12 are formed on one side (e.g., the top surface) of the substrate 10, and the longitudinal electrodes 14 are formed over the lateral electrodes 12 and on the same side (i.e., the top surface) of the substrate 10. Discrete insulating areas 13 are additionally formed at crossover points between the lateral electrodes 12 and the longitudinal electrodes 14 to respectively provide insulation so that the lateral electrodes 12 and the longitudinal electrodes 14 will not create a short circuit.

It is noted that, in both the self-capacitance and the mutual-capacitance touch panels, electrodes are manufactured in two axes, such as Cartesian coordinate system or polar coordinate system, to determine the touching location. However, using two axes complicates their manufacturing process. Regarding the touch panel as shown in FIG. 1A, for example, two ITO layers need to be formed to manufacture the lateral electrodes 12 and the longitudinal electrodes 14 respectively. Regarding the touch panel as shown in FIG. 1C, an additional insulating layer need to be formed to manufacture the crossover-point insulating areas 13 so that conductive lines on each axis will not create a short circuit.

Conventional touch panels are designed to report a single touching location even when multiple objects are present on the surface of the touch panel at the same time. Oftentimes, an average of all simultaneously touching points is determined at best and a single point that falls somewhere among the touching points is reported. In order to expand the applicability of the touch panel, a multi-touch panel thus becomes a growing trend that provides the function of simultaneously recognizing or reporting two or more touching points.

US 2009/0114457 A1 refers to the detection of multiple touching points on a capacitive ITO touchpad. For this purpose, a plurality of sensing lines are disposed in a parallel arrangement, wherein each of the sensing lines has a relatively large distance. In this way, an intensity of the detected signal is affected by the resistances of the line to the touching point, thereby indicating a touch distance.

US 2009/0267914 discloses techniques for determining a single touch location on an ITO bar by measuring two voltage from both ends of the ITO bar.

The document "Capacitive Sensor Operation Part 1: The Basics, Sensors" by Mark Kretschmar et al., describes how the capacitance of a capacitive sensor may be detected by applying alternating voltages.

For the reason that conventional touch panels either suffer complex manufacturing process or could not simultaneously register multiple touching points, a need has arisen to propose a novel multi-touch panel that has a simple structure and requires simplified manufacturing process.

## SUMMARY OF THE INVENTION

The invention relates to a single-axis capacitive multi-touch system according to claim 1, and a single-axis capacitive multi-touch method according to claim 10.

In view of the foregoing, embodiments of the present invention provide a single-axis capacitive multi-touch panel, system and method, which use single layer and single axis electrodes, thereby simplifying the process of manufacturing the multi-touch panel. The multiple touches on the same conductive line can be detected.

According to the invention, the single-axis capacitive multi-touch system includes a multi-touch panel, a driving circuit and a measuring circuit. The multi-touch panel includes a substrate and a number of conductive lines formed on one side of the substrate, wherein the conductive lines are arranged in a single axis. The driving circuit, for producing an alternating-current signal, is operatively coupled to the conductive lines of the multi-touch panel. The measuring circuit, for receiving an output signal according to the alternating-current signal to determine touch location, is operatively coupled to the conductive lines of the multi-touch panel.

According to the invention, the single-axis capacitive multi-touch method performs as follows. An alternating-current signal with a respective frequency is provided, followed by driving a number of conductive lines in turn by the alternating-current signal to generate an electromagnetic field. An output signal is received from the conductive lines. Characteristics of a transfer function of the conductive line are determined based on the alternating-current signal and the output signal, thereby determining touching points on the conductive line.

## BRIEF DESCRIPTION OF THE DRAWINGS

Many aspects of the present structure and manufacture method can be better understood with reference to the following drawings. The components in the drawings are not necessarily to scale, emphasis instead being placed upon clearly illustrating the principles of the present disclosures. Moreover, in the drawings, like reference numerals designate corresponding parts throughout the several views.

FIG. 1A shows a schematic top view of a conventional touch panel;
FIG. 1B shows a cross-sectional view taken along a sectional line 1B-1B' of FIG. 1A;
FIG. 1C shows a schematic top view of another conventional touch panel;
FIG. ID shows a cross-sectional view taken along a sectional line 1D-1D' of FIG. 1C;
FIG. 2A shows a schematic diagram that illustrates a single-axis capacitive multi-touch system according to one embodiment of the present invention;
FIG. 2B shows a cross-sectional view taken along a sectional line 2B-2B' of FIG. 2A;
FIG. 2C shows a cross-sectional view of a touchscreen display;
FIG. 2D to FIG. 2F show some exemplary conductive lines formed on the substrate;
FIG. 3 shows an electrical equivalent circuit of one of the conductive lines in FIG. 2A/2B;
FIG. 4A shows an electrical equivalent circuit of one conductive line after two nodes are touched;
FIG. 4B shows an electrical equivalent circuit of one conductive line after three nodes are touched;
FIG. 5 shows a flow diagram that illustrates a method of operating a single-axis capacitive multi-touch system according to one embodiment of the present invention; and
FIG. 6 shows an exemplary embodiment of the multi-touch system of FIG. 2A/B.

## DETAILED DESCRIPTION OF THE INVENTION

The detailed description of the present invention will be discussed in the following embodiments, which are not intended to limit the scope of the present invention, but can be adapted for other applications. While drawings are illustrated in details, it is appreciated that the quantity of the disclosed components may be greater or less than that disclosed, except expressly restricting the amount of the components.

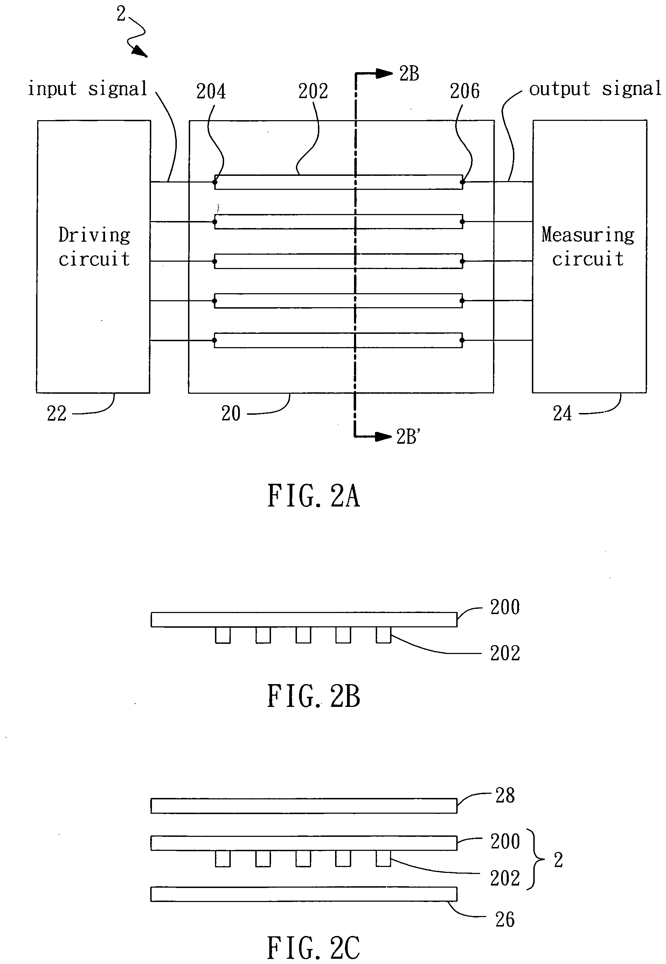

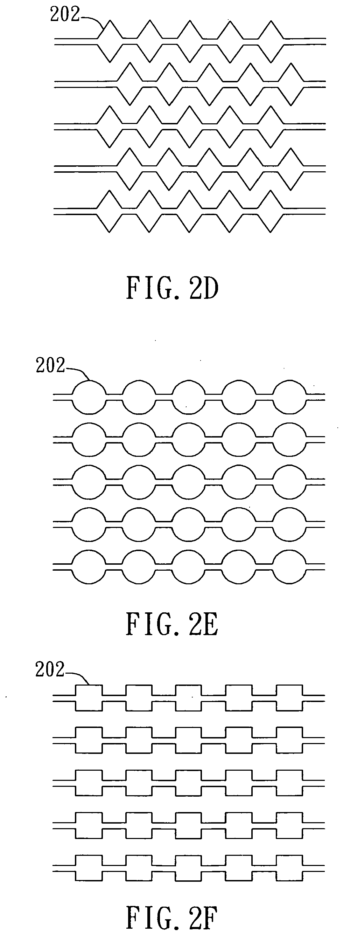

FIG. 2A shows a schematic diagram that illustrates a single-axis capacitive multi-touch system 2 according to one embodiment of the present invention. FIG. 2B shows a cross-sectional view taken along a sectional line 2B-2B' of FIG. 2A. The single-axis capacitive multi-touch system (the multi-touch system for short) 2 is capable of simultaneously recognizing or reporting two or more touching points. As shown in FIG. 2C, the multi-touch system 2 may be integrated with a display 26 such as a liquid crystal display (LCD) to result in a touchscreen display, for example, by disposing the multi-touch system 2 in front of the LCD. A cover 28 made of, e.g., glass or acrylic, may be disposed over the multi-touch system 2 to act as a touching surface. The cover 28, the multi-touch system 2 and the display 26 may be bonded together, for example, by using transparent adhesive. The resultant touchscreen display may be further integrated with a host device such as a computer.

In the embodiment, the multi-touch system 2 includes a single-axis capacitive multi-touch panel (the multi-touch panel for short) 20, a driving circuit 22 operatively coupled to the input nodes 204 of the multi-touch panel 20, and a measuring circuit 24 operatively coupled to the output nodes 206 of the multi-touch panel 20. Specifically, the multi-touch panel 20 primarily includes a substrate 200 and a number of elongated conductive lines (or electrodes) 202 formed on one side (e.g., the bottom side or the top side) of the substrate 200. The substrate 200 may be, but not limited to, a transparent substrate. For the purpose of illustration, only five conductive lines are shown while the number of the conductive lines may be specifically designed according to specific requirements and applications. The substrate 200 may be made of, but not limited to, glass, plastic and/or the like. The conductive lines 202 may be made of transparent conductive material such as Indium tin oxide (ITO) or Antimony tin oxide (ATO), which is electrically conductive and optically transparent. The conductive lines 202 are arranged in a single axis. In the embodiment, the conductive lines 202 are spatially separated from each other without crossing, and are preferably parallel to each other. Although straight lines are shown, it is appreciated by those skilled in the art that the shape (e.g., the width) of each conductive line 202 may be varied along the conductive line 202 in order to change its electrical property such as resistance or inductance. FIG. 2D to FIG. 2F show some exemplary conductive lines 202 formed on the substrate 200. As shown, the conductive lines 202 might be of different shapes, such as diamond-shaped, rounded or square.

The single-side pattern of the conductive lines 202 may be manufactured by firstly vacuum sputtering a conductive layer, for example, on the bottom surface of the substrate 200. Subsequently, a photoresist layer is applied to the conductive layer, and the photoresist layer is then covered with a patterned photomask, followed by exposing to ultraviolet (UV) and developing the photoresist layer, thereby exposing regions of the conductive layer. After etching the exposed regions, the conductive lines or electrodes 202 are thus formed in the conductive layer, followed by removing the remaining photoresist on the conductive layer.

The driving circuit 22 and the measuring circuit 24 may be formed on the peripheral edge of the substrate 200. Alternatively, the driving circuit 22 and the measuring circuit 24 may be operatively coupled to the substrate 200, for example, via flexible printed circuit board.

The driving circuit 22 provides input signals for conductive lines 202 of the multi-touch panel 20. The input signal is an alternating-current signal. Any conductive line 202 has an inherent resistance to a current flowing through it. It generates electromagnetic field when an alternating current flows through it. This electromagnetic field generation produces inductance where the inductive reactance of the conductive line changes with a changing frequency of the alternating-current signal. If a capacitance is introduced at any point of the conductive line, then the combination of the inductance, resistance and the capacitance will form a filter.

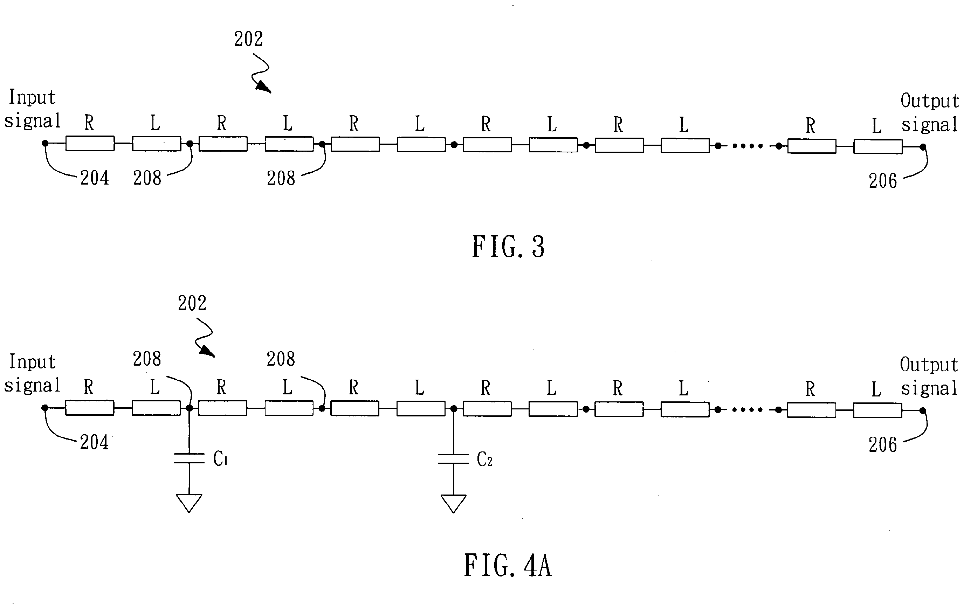

FIG. 3 shows an electrical equivalent circuit of one of the conductive lines 202 in FIG. 2A/2B. As shown in the figure, the conductive line 202 may be modeled as an RL interconnected line having a number of segments. Each segment includes a resistor R and an inductor L in series between two neighboring nodes 208, between input node 204 and its neighboring node 208, or between the output node 206 and its neighboring node 208. In the embodiment, the number of segments of the conductive line 202 corresponds to the number of touching points (e.g., nodes 208).

FIG. 4A shows an electrical equivalent circuit of one conductive line 202 after two nodes 208 are touched, for example, by fingers. Capacitance $C_1$ and capacitance $C_2$ are respectively introduced due to the interaction between the fingers and the electromagnetic field along the conductive line 202 that is activated. The capacitance $C_1$ is modeled as a first capacitor $C_1$ electrically coupled between the node 208 to be touched and the ground, and another capacitance $C_2$ is modeled as a second capacitor $C_2$ electrically coupled between the node 208 to be touched and the ground. The resistors R, the inductors L and the capacitors $C_1/C_2$ therefore form a filter that can change the characteristic of an input signal (provided by the driving circuit 22) inputted to the input node 204. The locations of the touching points can then be determined by analyzing response characteristic (e.g., filter coefficients) at the output node 206 by the measuring circuit 24.

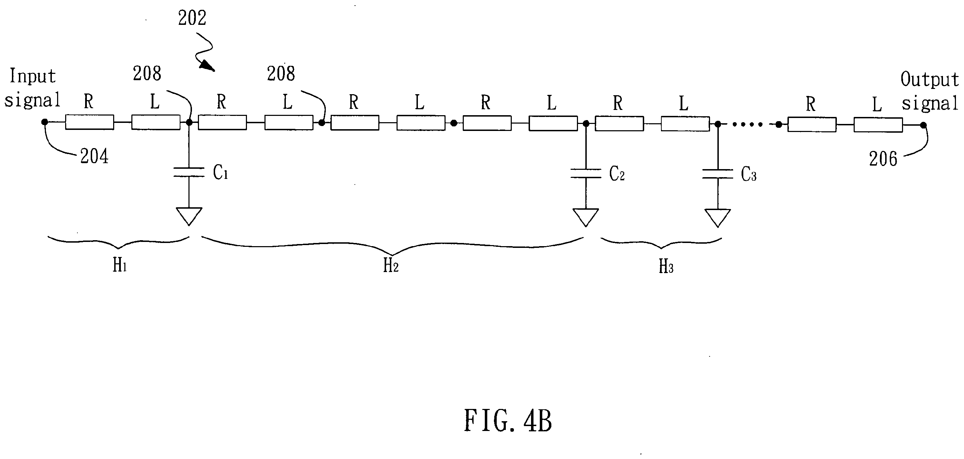

FIG. 4B shows another electrical equivalent circuit of one conductive line 202 after three nodes 208 are touched, for example, by fingers. Capacitance $C_1$, capacitance $C_2$ and capacitance $C_3$ are respectively introduced due to the interaction between the fingers and the electromagnetic field along the conductive line 202 that is activated. The capacitances $C_1$, $C_2$ and $C_3$ are modeled as a first capacitor $C_1$, a second capacitor $C_2$ and a third capacitor $C_3$ respectively. The resistors R, the inductors L and the capacitors $C_1/C_2/C_3$ therefore form a filter that can change the characteristic of an input signal fed to the input node 204. The locations of the touching points can then be determined by analyzing response characteristic at the output node 206. It is particularly noted that the resultant filter with dual touch as shown in FIG. 4A is distinct from the resultant filter with triple touch as shown in FIG. 4B, for example, with distinct filter coefficients.

Specifically speaking, a single touch will make the transfer function of the conductive line 202 a second-order function. A dual touch will make the transfer function of the conductive line 202 a fourth-order function. A triple touch will make the conductive line 202 a six-order function. As these transfer functions alter the input signal in different ways, the number of touching points and their corresponding locations can be determined according to the given characteristic of the input signal and the measured characteristics of the output signal.

With respect to the equivalent circuit shown in FIG. 4B, for example, there are three touching points where capacitances are introduced respectively. A sub-transfer function ($H_1$, $H_2$ or $H_3$) is thus generated associated with each introduced capacitor ($C_1$, $C_2$ or $C_3$). Therefore, the overall transfer function H of the entire conductive line 202 may be obtained by multiplying the three sub-transfer functions $H_1$, $H_2$ and $H_3$. To elaborate, the sub-transfer functions $H_1$, $H_2$ and $H_3$ and the overall transfer function H may be derived as follows:

$$H_1(s) = \frac{1/sC_1}{R+sL+1/sC_1} = \frac{1}{s^2LC_1 + sRC_1 + 1}$$

$$H_2(s) = \frac{1/sC_2}{3R+3sL+1/sC_2} = \frac{1}{3s^2LC_2 + 3sRC_2 + 1}$$

$$H_3(s) = \frac{1/sC_3}{R+sL+1/sC_3} = \frac{1}{s^2LC_3 + sRC_3 + 1}$$

$$H(s) = H_1(s) \cdot H_2(s) \cdot H_3(s)$$
$$= \frac{1}{(s^2LC_1 + sRC_1 + 1)(3s^2LC_2 + 3sRC_2 + 1)(s^2LC_3 + sRC_3 + 1)}$$
$$= \frac{1}{\begin{array}{l}(3s^6L^3C_1C_2C_3 + 9s^5RL^2C_1C_2C_3 + 9s^4RL^2C_1C_2C_3 + 3s^4L^2C_2C_3 + 3s^4L^2C_1C_2 + s^4L^2C_1C_3 + \\ 2s^2RLC_1C_3 + 6s^3RLC_2C_3 + 6s^3RLC_1C_2 + 3s^3R^3C_1C_2C_3 + 3s^2R^2C_1C_2 + \\ 3s^2LC_2 + 3s^2R^2C_2C_3 + s^2R^2C_1C_3 + s^2LC_3 + s^2LC_1 + sRC_3 + sRC_1 + 3sRC_2 + 1)\end{array}}$$

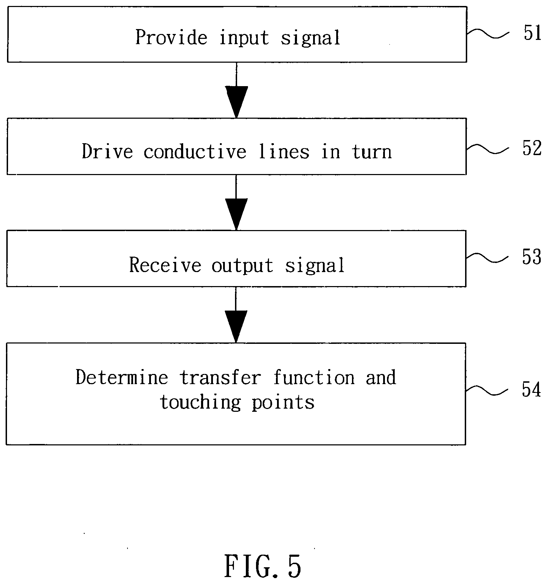

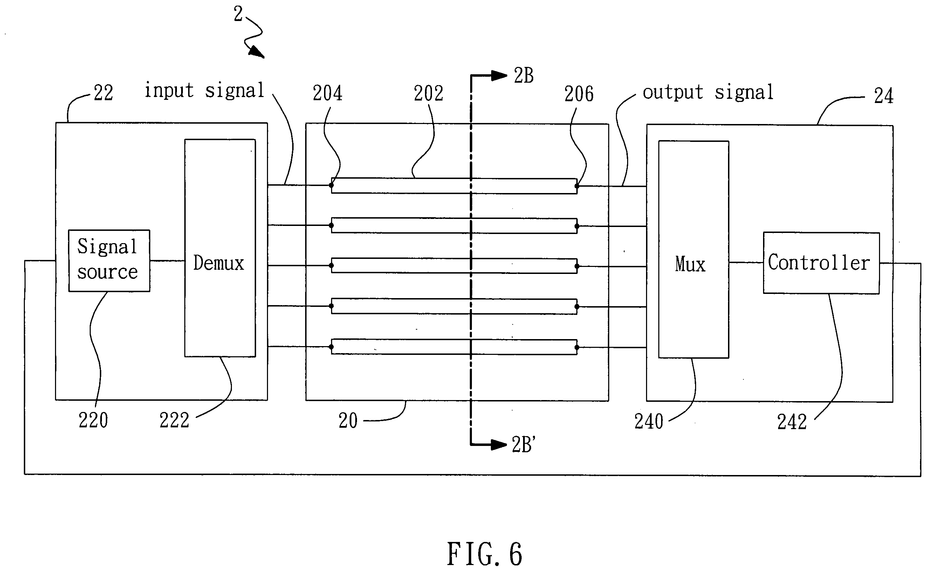

FIG. 5 shows a flow diagram that illustrates a method of operating a single-axis capacitive multi-touch system 2 (FIG. 2A) according to one embodiment of the present invention. Specifically, in step 51, an input signal is provided by the driving circuit 22 and is then used to drive the multi-touch panel 20 at the input nodes 204. The input signal is preferably an alternating-current (AC) signal. FIG. 6 shows an exemplary embodiment of the multi-touch system 2. Specifically, the driving circuit 22 includes a signal source 220 configured to generate the required input signal. The generated input signal is then demultiplexed by a demultiplexer (Demux) 222, which transfers the input signal to one of the conductive lines 202 at a time. Subsequently, the transferred (or demultiplexed) input signal is then used to drive the conductive lines 202 in turn (step 52). As described above, each conductive line 202 has certain resistance and certain inductance. The inductive reactance of the conductive line 202 will change based on the frequency of the input signal applied to the conductive line 202. The shape of the conductive line 202 may affect the resistance and the inductive reactance. For example, a curved conductive line 202 has higher resistance and inductive reactance than a straight conductive line 202. Specifically speaking, the conductive line generates electromagnetic field when an alternating current flows through it. The electromagnetic field generation produces inductance where the inductive reactance of the conductive line changes with the changing frequency. If an object such a finger touches the conductive line 202 and introduces a capacitance as a result of the touch, then the combination of the inductance, the resistance and the capacitance will form a filter that will accordingly change the characteristics of the input signal.

Afterwards, in step 53, the output signal is received by the measuring circuit 24. In the exemplary embodiment as shown in FIG. 6, the measuring circuit 24 includes a multiplexer (Mux) 240 configured to receive and pass the output signal from one of the conductive lines 202 at a time. The measuring circuit 24 also includes a controller 242 configured to measure transient response in synchronization with the driving circuit 22. Based on the signal characteristics at both ends, i.e., the input node 204 and the output node 206, of the conductive line 202, the controller 242 can then determine the characteristics (e.g., filter coefficients) of the transfer function of the conductive line 202 (step 54). This in turn leads to the determination of the touching points on the conductive line 202. By knowing the signal characteristics at the both ends of the conductive line, the location of the capacitance can be determined. Thus, the multiple touches on the same conductive line also can be detected.

Specifically speaking, the coefficients of the transfer function of the conductive line 202 in the embodiment may be obtained, for example, according to the method disclosed in US Patent 7,251,791, entitled "Methods to Generate State Space Models by Closed Forms and Transfer Functions by Recursive Algorithms for RLC Interconnect and Transmission Line and Their Model Reduction and Simulation," by Wang. According to the disclosed method and model, the transient responses at all nodes 208 on the conductive line 202 can be efficiently and accurately obtained. Accordingly, the number of the touching points and their corresponding locations can be determined according to the obtained coefficients of the transfer function.

Although specific embodiments have been illustrated and described, it will be appreciated by those skilled in the art that various modifications may be made without departing from the scope of the present invention, which is intended to be limited solely by the appended claims.

**Claims**

1. A single-axis capacitive multi-touch system (2), comprising:

   a multi-touch panel (20) having a substrate (200) and a plurality of conductive lines (202) formed on one side of the substrate (200), wherein the conductive lines (202) are arranged in a single axis;
   a driving circuit (22), for producing an alternating-current signal, operatively coupled to the conductive lines (202) of the multi-touch panel (20); and
   a measuring circuit (24), for receiving an output signal according to the alternating-current signal to determine touch location, operatively coupled to the conductive lines (202) of the multi-touch panel (20), wherein
   the driving circuit (22) is configured to provide the alternating-current signal to drive the conductive lines (202) in turn, and the measuring circuit (24) works in synchronization with the driving circuit (22) and is configured to receive an output signal from one of the conductive lines (202) at a time, thereby characteristics of a transfer function of the conductive line (202) is determined based on the alternating-current signal and the output signal,

   **characterized in that** the system (2) is further adapted to obtain filter coefficients of an equivalent electrical circuit to analyze the characteristics of the transfer function, and to determine the number of a plurality of simultaneous touching points on the same conductive line (202) and their corresponding locations on the same conductive line (202) by analyzing the filter coefficients;
   wherein in the equivalent electrical circuit, the conductive line (202) is modelled as an RL interconnected line having a number of segments, each segment including a resistor (R) and an inductor (L);
   a capacitance due to an object touching a segment of the conductive line (202) is modelled as a capacitor ($C_1$, $C_2$, $C_3$); and
   a combination of the inductor (L), the resistor (R) and the capacitor ($C_1$, $C_2$, $C_3$) form a filter.

2. The system (2) of claim 1, wherein the output signal is changed based on a frequency of the alternating-current signal.

3. The system (2) of claim 1, wherein the driving circuit (22) operatively couples to a plurality of input nodes (204) of the multi-touch panel (20), and the measuring circuit (24) operatively couples to a plurality of output nodes (206) of the multi-touch panel (20).

4. The system (2) of claim 1, further comprising:

   a display (26) disposed at the back of the multi-touch panel (20); and
   a cover (28) disposed in front of the multi-touch panel (20);
   wherein the cover (28), the multi-touch panel (20) and the display (26) are bonded together to result in a touchscreen display.

5. The system (2) of claim 1, wherein the conductive lines (202) are spatially separated from each other without crossing, and are parallel to each other.

6. The system (2) of claim 1, wherein the driving circuit (22) and the measuring circuit (24) are disposed on a peripheral edge of the substrate (200).

7. The system (2) of claim 1, further comprising at least one flexible printed circuit board used to connect the driving circuit (22) and the measuring circuit (24) to the multi-touch panel (20).

**8.** The system (2) of claim 1, wherein the driving circuit (22) comprises:

a signal source (220) configured to generate the alternating-current signal; and
a demultiplexer (222) configured to transfer the generated alternating-current signal to one of the conductive lines (202) at a time.

**9.** The system (2) of claim 1, wherein the measuring circuit (24) comprises:

a multiplexer (240) configured to receive the output signal from one of the conductive lines (202) at a time; and
a controller (242) configured to determine the characteristics of the transfer function of the conductive line (202).

**10.** A method for a single axis capacitive multi-touch system comprising a multi-touch panel having a substrate and a plurality of conductive lines formed on one side of the substrate, wherein the conductive lines are arranged in a single axis, comprising:

providing an alternating-current signal;
driving the plurality of conductive lines (202) in turn by the alternating-current signal to generate an electromagnetic field;
receiving an output signal from the conductive lines (202); and
determining characteristics of a transfer function of one of the conductive lines (202) based on the alternating-current signal and the output signal;

**characterized in that** the step of determining the characteristics of the transfer function comprises:

obtaining filter coefficients of an equivalent electrical circuit to analyze the characteristics of the transfer function; and
determining the number of a plurality of simultaneous touching points on the same conductive line (202) and their corresponding locations on the same conductive line (202) by analyzing the filter coefficients ;

wherein in the equivalent electrical circuit, the conductive line (202) is modelled as an RL interconnected line having a number of segments, each segment including a resistor (R) and an inductor (L);
a capacitance due to an object touching a segment of the conductive line (202) is modelled as a capacitor ($C_1$, $C_2$, $C_3$); and
a combination of the inductor (L), the resistor (R) and the capacitor ($C_1$, $C_2$, $C_3$) form a filter.

**11.** The method of claim 10, wherein the step of providing the alternating-current signal comprises:

generating the alternating-current signal; and
demultiplexing the alternating-current signal to transfer the generated alternating-current signal to one of the conductive lines (202) at a time.

**12.** The method of claim 10, wherein the step of receiving the output signal comprises:
multiplexing to obtain the output signal from one of the conductive lines (202) at a time, wherein the output signal is received in synchronization with driving the conductive lines (202) with the alternating-current signal.

**13.** The method of claim 10, further comprising:

touching the single-axis capacitive multi-touch panel (20) at one or more touching points, thereby correspondingly introducing at least one capacitance;
wherein inherent resistance and inductance of the conductive line and the introduced capacitance together form a filter that accordingly changes characteristics of the alternating-current signal.


**Patentansprüche**

**1.** Monoaxiales kapazitives Multitouch-System (2), umfassend:

ein Multitouch-Eingabeelement (20) mit einem Substrat (200) und einer Mehrzahl von Leiterbahnen (202), die auf einer Seite des Substrats (200) ausgebildet sind, wobei die Leiterbahnen (202) entlang einer einzigen Achse ausgerichtet sind;

eine Treiberschaltung (22) zum Erzeugen eines Wechselstromsignals, welche operativ an die Leiterbahnen (202) des Multitouch-Eingabeelements (20) angekoppelt ist,

ein Messschaltkreis (24) zum Empfangen eines Ausgangssignals entsprechend dem Wechselstromsignal, um einen Berührungspunkt zu bestimmen, wobei der Messschaltkreis (24) operativ angeschlossen ist an die Leiterbahnen (202) des Multitouch-Eingabeelements (20),

wobei die Treiberschaltung (22) dazu eingerichtet ist, das Wechselstromsignal zu erzeugen, um wiederum die Leiterbahnen (202) zu versorgen, und der Messschaltkreis (24) synchron mit der Treiberschaltung (22) arbeitet und dazu eingerichtet ist, ein Ausgangssignal von nur einer der Leiterbahnen (202) gleichzeitig zu empfangen, so dass eine Charakteristik einer Transferfunktion der Leiterbahn (202) bestimmt wird auf Grundlage des Wechselstromsignals und des Ausgangssignals,

**dadurch gekennzeichnet, dass** das System (2) des Weiteren dazu eingerichtet ist, Filterkoeffizienten eines äquivalenten elektrischen Schaltkreises zu gewinnen, um die Charakteristik der Transferfunktion zu analysieren, und um die Anzahl einer Mehrzahl von zeitgleich berührten Berührungspunkten auf derselben Leiterbahn (202) und ihre entsprechenden Positionen auf derselben Leiterbahn (202) zu bestimmen, indem die Filterkoeffizienten analysiert werden;

wobei in dem äquivalenten elektrischen Schaltkreis die Leiterbahn (202) modelliert ist als eine RL- vernetzte Bahn mit einer Anzahl von Segmenten, wobei jedes Segment einen Widerstand (R) und eine Induktivität (L) umfasst;

wobei ein kapazitiver Widerstand aufgrund einer Berührung eines Segments der Leiterbahn (202) durch ein Objekt modelliert ist als ein Kondensator ($C_1$, $C_2$, $C_3$); und

wobei eine Kombination der Induktivität (L), des Widerstands (R) und des Kondensators ($C_1$, $C_2$, $C_3$) einen Filter bilden.

2. System (2) gemäß Anspruch 1, wobei das Ausgangssignal geändert wird auf Grundlage einer Frequenz des Wechselstromsignals.

3. System (2) gemäß Anspruch 1, wobei die Treiberschaltung (22) operativ angekoppelt ist an eine Mehrzahl von Eingangsknoten (204) des Multitouch-Eingabeelements (20) und der Messschaltkreis (24) operativ angekoppelt ist an eine Mehrzahl von Ausgangsknoten (206) des Multitouch-Eingabeelements (20).

4. System (2) gemäß Anspruch 1, weiter umfassend:

ein Anzeigeelement (26), welches an der Rückseite des Multitouch-Eingabeelements (20) angebracht ist; und
eine Abdeckung (28), welche an der Vorderseite des Multitouch-Eingabeelements (20) angebracht ist;
wobei die Abdeckung (28), das Multitouch-Eingabeelement (20) und das Anzeigeelement (26) so miteinander verbunden sind, dass sie ein Touchscreen-Anzeigeelement bilden.

5. System (2) gemäß Anspruch 1, wobei die Leiterbahnen (202) räumlich voneinander getrennt sind, ohne sich zu überschneiden, und parallel zueinander verlaufen.

6. System (2) gemäß Anspruch 1, wobei die Treiberschaltung (22) und der Messschaltkreis (24) sich in einem Randbereich des Substrats (200) befinden.

7. System (2) gemäß Anspruch 1, weiterhin umfassend wenigstens eine flexible gedruckte Leiterplatte, die dazu dient, die Treiberschaltung (22) und den Messschaltkreis (24) mit dem Multitouch-Eingabeelement (20) zu verbinden.

8. System (2) gemäß Anspruch 1, wobei die Treiberschaltung (22) umfasst:

eine Signalquelle (220), die dazu eingerichtet ist, das Wechselstromsignal zu erzeugen; und
einen Demultiplexer (222), der dazu eingerichtet ist, das erzeugte Wechselstromsignal auf jeweils eine einzige der Leiterbahnen (202) zu übertragen.

9. System (2) gemäß Anspruch 1, wobei der Messschaltkreis (24) umfasst:

einen Multiplexer (240), der dazu eingerichtet ist, das Ausgangssignal von jeweils einer einzigen der Leiterbahnen (202) zu empfangen; und

eine Steuereinheit (242), die dazu eingerichtet ist, die Charakteristik der Transferfunktion der Leiterbahn (202) zu bestimmen.

10. Verfahren für ein monoaxiales kapazitives Multitouch-System, welches ein Multitouch-Eingabeelement mit einem Substrat und einer Mehrzahl von Leiterbahnen, die auf einer Seite des Substrats ausgebildet sind, umfasst, wobei die Leiterbahnen entlang einer einzigen Achse ausgerichtet sind, das Verfahren umfassend:

ein Bereitstellen eines Wechselstromsignals;
ein Versorgen der Mehrzahl der Leiterbahnen (202) durch das Wechselstromsignal, um ein elektromagnetisches Feld zu erzeugen;
ein Erhalten eines Ausgangssignals von den Leiterbahnen (202); und
ein Bestimmen einer Charakteristik einer Transferfunktion von einer der Leiterbahnen (202) basierend auf dem Wechselstromsignal und dem Ausgangssignal; **dadurch gekennzeichnet, dass** der Schritt des Bestimmens der Charakteristik der Transferfunktion umfasst:
ein Gewinnen von Filterkoeffizienten eines äquivalenten elektrischen Schaltkreises, um die Charakteristik der Transferfunktion zu analysieren; und ein Bestimmen der Anzahl einer Mehrzahl von zeitgleich berührten Berührungspunkten auf derselben Leiterbahn (202) und ihrer entsprechenden Positionen auf derselben Leiterbahn (202) durch Analysieren der Filterkoeffizienten; wobei in dem äquivalenten elektrischen Schaltkreis die Leiterbahn (202) modelliert ist als eine RL- vernetzte Bahn mit einer Anzahl von Segmenten, wobei jedes Segment einen Widerstand (R) und eine Induktivität (L) umfasst;

wobei ein kapazitiver Widerstand aufgrund einer Berührung eines Segments der Leiterbahn (202) durch ein Objekt modelliert ist als ein Kondensator ($C_1$, $C_2$, $C_3$); und
wobei eine Kombination der Induktivität (L), des Widerstands (R) und des Kondensators ($C_1$, $C_2$, $C_3$) einen Filter bilden.

11. Verfahren gemäß Anspruch 10, wobei der Schritt des Bereitstellens des Wechselstromsignals umfasst:

Erzeugen des Wechselstromsignals; und
Demultiplexen des Wechselstromsignals, um das erzeugte Wechselstromsignal auf jeweils eine einzige der Leiterbahnen (202) zu übertragen.

12. Verfahren gemäß Anspruch 10, wobei der Schritt des Empfangens des Ausgangssignals umfasst:
Multiplexen, um das Ausgangssignal von jeweils einer einzigen der Leiterbahnen (202) zu erhalten, wobei das Ausgangssignal synchron empfangen wird, während die Leiterbahnen (202) mit dem Wechselstromsignal versorgt werden.

13. Verfahren gemäß Anspruch 10, weiterhin umfassend:

Berühren des monoaxialen kapazitiven Multitouch-Eingabeelements (20) an einem oder mehreren Berührungspunkten, wodurch entsprechend mindestens eine Kapazität erzeugt wird;
wobei ein inhärenter Widerstand und eine Induktivität der Leiterbahn und der eingeführten Kapazität zusammen einen Filter bilden, der entsprechend die Charakteristik des Wechselstromsignals verändert.

**Revendications**

1. Système tactile multipoint capacitif à un seul axe (2), comprenant :

un panneau tactile multipoint (20) présentant un substrat (200) et une pluralité de lignes conductrices (202) formées sur un côté du substrat (200), dans lequel les lignes conductrices (202) sont agencées dans un seul axe ;
un circuit d'excitation (22), destiné à produire un signal de courant alternatif, couplé de manière opérationnelle aux lignes conductrices (202) du panneau tactile multipoint (20) ; et
un circuit de mesure (24), destiné à recevoir un signal de sortie selon le signal de courant alternatif, en vue de déterminer un emplacement d'effleurement, couplé de manière opérationnelle aux lignes conductrices (202) du panneau tactile multipoint (20), dans lequel :
le circuit d'excitation (22) est configuré de manière à fournir le signal de courant alternatif en vue d'exciter les lignes conductrices (202) à tour de rôle, et le circuit de mesure (24) fonctionne en synchronisation avec le circuit d'excitation (22) et est configuré de manière à recevoir un signal de sortie en provenance d'une des lignes conductrices (202) à la fois, moyennant quoi des caractéristiques d'une fonction de transfert de la ligne conductrice (202) sont déterminées sur la base du signal de courant alternatif et du signal de sortie ;

**caractérisé en ce que** le système (2) est en outre apte à obtenir des coefficients de filtrage d'un circuit électrique équivalent pour analyser les caractéristiques de la fonction de transfert, et à déterminer le nombre d'une pluralité de points de contact simultanés sur la même ligne conductrice (202) et leurs emplacements correspondants sur la même ligne conductrice (202) en analysant les coefficients de filtrage ;

dans lequel, dans le circuit électrique équivalent, la ligne conductrice (202) est modélisée sous la forme d'une ligne interconnectée RL présentant un nombre de segments, chaque segment incluant une résistance (R) et une bobine d'induction (L) ; une capacité occasionnée par un objet touchant un segment de la ligne conductrice (202) est modélisée sous la forme d'un condensateur ($C_1$, $C_2$, $C_3$) ; et

une combinaison de la bobine d'induction (L), de la résistance (R) et du condensateur ($C_1$, $C_2$, $C_3$) forme un filtre.

2. Système (2) selon la revendication 1, dans lequel le signal de sortie est modifié sur la base d'une fréquence du signal de courant alternatif.

3. Système (2) selon la revendication 1, dans lequel le circuit d'excitation (22) se couple de manière opérationnelle à une pluralité de noeuds d'entrée (204) du panneau tactile multipoint (20), et le circuit de mesure (24) se couple de manière opérationnelle à une pluralité de noeuds de sortie (206) du panneau tactile multipoint (20).

4. Système (2) selon la revendication 1, comprenant en outre :

   un écran d'affichage (26) disposé à l'arrière du panneau tactile multipoint (20) ; et
   un couvercle (28) disposé à l'avant du panneau tactile multipoint (20) ;
   dans lequel le couvercle (28), le panneau tactile multipoint (20) et l'écran d'affichage (26) sont reliés ensemble en vue de former un écran tactile.

5. Système (2) selon la revendication 1, dans lequel les lignes conductrices (202) sont séparées les unes des autres dans l'espace, sans se croiser, et sont parallèles les unes aux autres.

6. Système (2) selon la revendication 1, dans lequel le circuit d'excitation (22) et le circuit de mesure (24) sont disposés sur un bord périphérique du substrat (200).

7. Système (2) selon la revendication 1, comprenant en outre au moins une carte de circuit imprimé flexible utilisée en vue de connecter le circuit d'excitation (22) et le circuit de mesure (24) au panneau tactile multipoint (20).

8. Système (2) selon la revendication 1, dans lequel le circuit d'excitation (22) comprend :

   une source de signal (220) configurée de manière à générer le signal de courant alternatif ; et
   un démultiplexeur (222) configuré de manière à transférer le signal de courant alternatif généré vers l'une des lignes conductrices (202) à la fois.

9. Système (2) selon la revendication 1, dans lequel le circuit de mesure (24) comprend :

   un multiplexeur (240) configuré de manière à recevoir le signal de sortie en provenance de l'une des lignes conductrices (202) à la fois ; et
   un contrôleur (242) configuré de manière à déterminer les caractéristiques de la fonction de transfert de la ligne conductrice (202).

10. Procédé pour un système tactile multipoint capacitif à un seul axe comprenant un panneau tactile multipoint présentant un substrat et une pluralité de lignes conductrices formées sur un côté du substrat, dans lequel les lignes conductrices sont disposées dans un seul axe, le procédé comprenant les étapes ci-dessous consistant à :

    fournir un signal de courant alternatif ;
    exciter la pluralité de lignes conductrices (202) à tour de rôle, par le biais du signal de courant alternatif, en vue de générer un champ électromagnétique ;
    recevoir un signal de sortie en provenance des lignes conductrices (202) ; et

déterminer des caractéristiques d'une fonction de transfert de l'une des lignes conductrices (202) sur la base du signal de courant alternatif et du signal de sortie ; **caractérisé en ce que** l'étape de détermination des caractéristiques de la fonction de transfert comprend les étapes ci-dessous consistant à :
obtenir des coefficients de filtrage d'un circuit électrique équivalent en vue d'analyser les caractéristiques de la fonction de transfert ; et
déterminer le nombre d'une pluralité de points de contact simultanés sur la même ligne conductrice (202) et leurs emplacements correspondants sur la même ligne conductrice (202), en analysant les coefficients de filtrage ;

dans lequel, dans le circuit électrique équivalent, la ligne conductrice (202) est modélisée sous la forme d'une ligne interconnectée RL présentant un nombre de segments, chaque segment incluant une résistance (R) et une bobine d'induction (L) ;
une capacité occasionnée par un objet touchant un segment de la ligne conductrice (202) est modélisée sous la forme d'un condensateur ($C_1$, $C_2$, $C_3$) ; et
une combinaison de la bobine d'induction (L), de la résistance (R) et du condensateur ($C_1$, $C_2$, $C_3$) forme un filtre.

11. Procédé selon la revendication 10, dans lequel l'étape de fourniture du signal de courant alternatif comprend les étapes ci-dessous consistant à :

générer le signal de courant alternatif ; et
démultiplexer le signal de courant alternatif en vue de transférer le signal de courant alternatif généré à l'une des lignes conductrices (202) à la fois.

12. Procédé selon la revendication 10, dans lequel l'étape de réception du signal de sortie comprend l'étape ci-dessous consistant à :
effectuer un multiplexage en vue d'obtenir le signal de sortie à partir de l'une des lignes conductrices (202) à la fois, dans lequel le signal de sortie est reçu en synchronisation avec l'excitation des lignes conductrices (202) avec le signal de courant alternatif.

13. Procédé selon la revendication 10, comprenant en outre l'étape ci-dessous consistant à :

effleurer le panneau tactile multipoint capacitif à un seul axe (20) au niveau d'un ou plusieurs points de contact, ce qui permet d'introduire par conséquent au moins une capacité ;
dans lequel la résistance et la bobine d'induction inhérentes de la ligne conductrice, et la capacité introduite, forment conjointement un filtre qui modifie en conséquence des caractéristiques du signal de courant alternatif.

FIG. 1A

FIG. 1B

FIG. 1C

FIG. 1D

FIG. 2A

FIG. 2B

FIG. 2C

202

FIG. 2D

202

FIG. 2E

202

FIG. 2F

Input
signal  R    L    R    L    R    L    R    L    R    L         R    L  Output
                                                                        signal

204  208         208                                          206

## FIG. 3

EP 2 638 456 B1

202

Input
signal  R    L  208  R    L  208  R    L    R    L    R    L       R    L  Output
                                                                           signal

204                                                                206

$C_1$                    $C_2$

## FIG. 4A

Input signal

Output signal

204

206

208

208

202

R L R L R L R L R L R L R L R L

$C_1$ $C_2$ $C_3$

$H_1$ $H_2$ $H_3$

FIG. 4B

| | |
|---|---|
| Provide input signal | 51 |

↓

| | |
|---|---|
| Drive conductive lines in turn | 52 |

↓

| | |
|---|---|
| Receive output signal | 53 |

↓

| | |
|---|---|
| Determine transfer function and touching points | 54 |

FIG. 5

FIG. 6

**EP 2 638 456 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090114457 A1
- US 20090267914 A
- US 7251791 B